# EUROPÄISCHE PATENTSCHRIFT

(11) **EP 1 141 455 B1**
(45) Veröffentlichungstag und Bekanntmachung des Hinweises auf die Patenterteilung: **26.03.2003**
(21) Anmeldenummer: 99959413.8
(22) Anmeldetag: 14.12.1999
(51) Int. Cl.: D03D 1/00, B60R 21/18

(54) **GURTBAND UND VERFAHREN ZU DESSEN HERSTELLUNG**
STRAP AND METHOD FOR PRODUCING SAME
SANGLE ET SON PROCEDE DE FABRICATION

(30) Priorität: 14.12.1998 DE 19857517; 17.03.1999 DE 19911972
(43) Veröffentlichungstag der Anmeldung: 10.10.2001
(73) Patentinhaber: Berger, Johann, D-73553 Alfdorf (DE)
(72) Erfinder: BERGER, Johann, D-73553 Alfdorf (DE); MÄRTZ, Josef, D-85386 Eching (DE)
(74) Vertreter: Fischer, Matthias, Dipl.-Ing.
(86) Internationale Anmeldenummer: EP9909937
(87) Internationale Veröffentlichungsnummer: WO00036197

(56) Entgegenhaltungen:
- DE-A- 2 008 048
- DE-A- 19 804 378
- US-A- 3 888 503

## Beschreibung

Die Erfindung betrifft ein Verfahren zur Herstellung eines gewebten aufblasbaren Gurtbandes, insbesondere Sicherheitsgurtbandes für Kraftfahrzeuge.

Aus der DE-PS 20 08 048 (Rutzki) ist ein Gurtband bekannt, das als Schlauch ausgebildet ist und in Teilbereichen eine eingenähte Reißfalte aufweist, die so ausgebildet ist, daß sie bei einer Kollision durch vom Gurt ausgeübte Zugkräfte aufreißt und das Öffnen eines damit gekoppelten Ventils das Aufblasen eines Teilbereiches des Schlauchgurtes bewirkt. Hierdurch wird der vor dem Unfall als Flachschlauch liegende Gurt, dessen Breite dem halben Umfang des aufgeblasenen Gurtes entspricht, teilweise schlagartig aufgeblasen. Er stellt dadurch ein gewisses, gegenüber dem einfachen Gurt vorteilhaftes, "Aufprallkissen" dar. Ein ausreichender Schutz des Fahrzeugpassagiers ist jedoch aufgrund der unbedeutenden Ausmaße des teilweise aufgeblasenen Schlauchgurtes nicht zufriedenstellend gewährleistet. Eine ebenfalls in der zitierten Schrift genannte Vergrößerung des Gurtschlauchumfanges mit einem aufblasbaren Kissen, welches in einem Gurtteil um den Gurt herum angeordnet ist, ist ebenfalls nachteilig, da sich das entsprechende Kissen im Notfall nicht unbedingt an der richtigen Stelle befindet und somit für seinen eigentlichen Zweck nicht zur Verfügung steht.

Aus der internationalen Patentanmeldung PCT/US95/10695 (Simula) ist ein aufblasbares schlauchförmiges Rückhaltesystem bekannt. Das hier gezeigte Sicherheitsgurtsystem besteht aus einem Beckengurt und einem Schultergurt, wobei der Beckengurt bereichsweise aus einem aufblasbaren Ballon besteht, der während des Aufblasens seine Länge verkürzt und damit neben einer Aufprallfunktion auch eine Gurtstrafffünktion hat. Hierbei ist zwar der Bauchraum des Passagiers besonders geschützt, der Schulter- und Kopfbereich jedoch, außer einer zusätzlichen Rückhaltung der Schulter durch den gestrafften Gurt, nicht weiter berück-sichtigt.

Aus der US 3 888 503 A ist eine Sicherheitsgurteinrichtung mit einem autblasbaren Sicherheitsgurt bekannt. Der dort beschriebene Sicherheitsgurt ist im gefalteten Zustand sehr voluminös und hat zwei ungleiche Kanten. Über die Herstellung sogenannter engerer Zwischenbereiche 15 und 16 sowie deren Fixierung im gefalteten Zustand nach Fig. 2 ist dieser Schrift nichts zu entnehmen.

Es ist eine Aufgabe der Erfindung einen Gurt bzw. ein Gurtband sowie ein Verfahren zu deren Herstellung zu schaffen, das weitgehend unbegrenzt, d.h. auch möglichst ortsunabhängig, in einer Unfallsituation optimalen Aufprallschutz gewährleistet, bzw. eine kostengünstige und zuverlässige Herstellung des Gurtbandes ermöglicht.

Die Aufgabe wird gelöst durch ein Verfahren nach Anspruch 1 und ein Gurtband gemäß Anspruch 5.

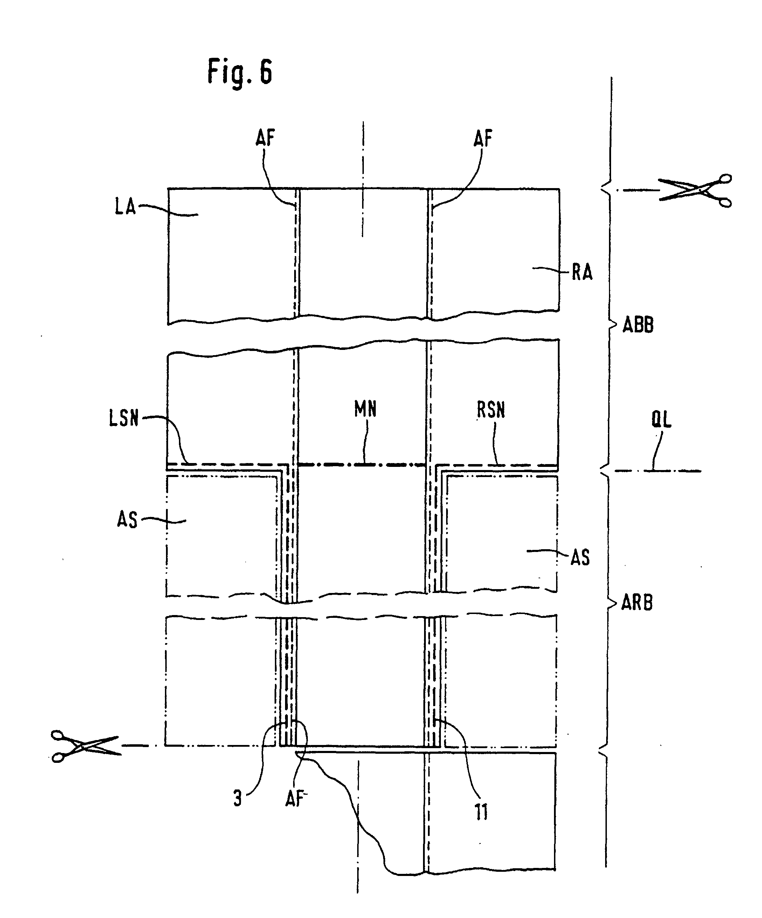

Das erfindungsgemäße Verfahren nach Anspruch 1 zum Herstellen eines Gurtbandes umfaßt (abgekürzt) folgende Schritte: Weben eines zweilagigen (obere oder erste Lage, untere oder zweite Lage) drei- oder mehrteiligen (wenigstens ein linkes Außenteil, Mittelteil, wenigstens ein rechtes Außenteil) Gewebes, zickzack-förmiges Umschlagen und Aufeinanderlegen von mehr als zwei Außenteilen, vom jeweils äußersten Außenteil zum jeweils innersten Außenteil, bis die mehr als zwei Außenteile auf den an das Mittelteil angrenzenden Außenteilen liegen, Umschlagen des einen an das Mittelteil angrenzenden Außenteils entlang der einen Faltzone auf die eine äußere, von der zweiten Lage wegzeigende Oberfläche des Mittelteils, Umschlagen des anderen Außenteils entlang der anderen Faltzone auf die andere äußere, von der ersten Lage wegzeigende Oberfläche des Mittelteils, so daß sich - in Kettrichtung gesehen-die Gestalt eines flachgedrückten Zick-Zack ergibt und Umstülpen des Mittelteils "nach links", so daß die ehemals voneinander weg zeigende eine und andere Oberfläche des Mittelteils einander zugekehrt sind und die umgeschlagenen Außenteile zwischen sich einschließen. Mit einem auf diese Art hergestellten Gurtband läßt sich vorteilhafterweise jede beliebige Gurtband/Luftsack-Konfiguration realisieren. Abhängig von der gewählten Anzahl von Außenteilen ergibt sich ein durch - infolge einer Kollision veranlaßtes - Aufblasen des Gurtluftsacks erreichbares Gurtluftsackvolumen unterschiedlicher Größe. Man kann damit auf unterschiedlichste Fahrzeugtypen, Sitzkonfigurationen, Passagiergrößen, aufzufangende Körpergewichte etc. eingehen. Ein weiterer Vorteil besteht darin, daß durch ein zusätzliches individuelles "Abnähen" der Außenteile, von den - im Webzustand äußersten - Rändern her nach innen zum Mittelteil hin, ein in Längsrichtung des Gurtbandes ungleichmäßiges Gurtsackvolumen geschaffen werden kann (Fig. 6 bis 8 und 10). Dadurch ist es dann möglich, den üblicherweise in der Türverkleidung untergebrachten Seitenairbag und den üblicherweise in der Dachleiste über den Türen untergebrachten Kopf-Airbag einzusparen. Der Passagier wird mit einem einzigen, im Sicherheitsgurt integrierten Airbag = Gurtsack im Becken-, Flanken-, Brust- und Kopfbereich - unabhängig von seiner Haltung, ob entspannt, erschlafft oder aufrecht sitzend - gesichert und vor Verletzungen durch Aufprallen auf Fahrzeugteile geschützt. Ein besonderer Vorteil des erfindungsgemäßen Verfahrens und des damit herstellbaren Gurtbandes liegt in der Einsparung mehrerer teuerer Airbagsysteme (pro Passagier wenigstens 1 Türairbag und 1 Seiten-/Kopf-Airbag). Das o.g. "Abnähen" ist nicht auf das tatsächliche Abnähen. d.h. das Legen einer Naht beschränkt. Damit sind sämtliche Maßnahmen gemeint, die zur individuellen lokalen Verbindung der oberen mit der unteren Gewebelage geeignet sind, wie Verweben, Kleben, Verschweißen und dergl. Besonders vorteilhaft und kostensparend ist die Herstellung des oder der "Abnäher(s)" durch gezieltes Verweben der oberen mit der unteren Gewebelage auf einer Jacquardwebmaschine.

Das erfindungsgemäße Verfahren nach Anspruch 2 zum Herstellen eines Gurtbandes umfaßt (abgekürzt) folgende Schritte: Weben eines zweilagigen (obere Lage, untere Lage) dreiteiligen (linker Außenteil, Mittelteil, rechter Außenteil) Gewebes. Umschlagen des einen Außenteils entlang der einen Faltzone auf die eine Oberfläche des Mittelteils, Umschlagen des anderen Außenteils entlang der anderen Faltzone auf die andere Oberfläche des Mittelteils, so daß sich - in Kettrichtung gesehen - die Gestalt eines flachgedrückten Z ergibt und Umstülpen des Mittelteils "nach links", so daß die ehemalige eine und andere Oberfläche des Mittelteils einander zugekehrt sind und die umgeschlagenen Außenteile zwischen sich einschließen.

Das Weben kann auf einer Jacquard-Breitwebmaschine oder einer Nadelband-Webmaschine durchgeführt werden. Das Umschlagen der Außenteile wird auf nicht weiter beschriebenen, einfachen und dazu geeigneten Vorrichtungen durchgeführt. Die Umstülpung des Mittelteils "nach links" geschieht dadurch, daß man in eine abgepaßte Länge Gurtband zwischen den beiden Mittelteillagen eine an der Spitze mit einem Greifer versehene Stange oder dgl. einführt, bis der Greifer am anderen offenen Ende des Gurtbandes wieder erscheint und in den Greifer die nach innen gestülpten Mittelteile zusammen mit den darauf gefalteten Außenteilen einklemmt und bei geeigneter Gegenhaltung die Stange mit dem Greifer wieder entgegen der Einführrichtung aus dem Inneren des Mittelteils herauszieht. Ist die Stange mit Greifer vollständig herausgezogen, liegt ein vollständig "nach links" umgestülptes Gurtband vor, in dem die Außenteile zwischen den Gewebelagen des Mittelteils untergebracht sind. Das erfindungsgemäße Verfahren ist deshalb von Vorteil, daß es sehr einfach ist und glatte Gurtbänder ergibt.

Der Schußfaden des erfindungsgemäßen Gurtbandes kann ein Multifil alleine oder ein Multifil mit einem Monofil sein. Der Einsatz von Monofil als Schußfaden ergibt ein steiferes, elastischeres Gurtband. Selbstverständlich können in das erfindungsgemäße Gurtband mit entsprechender Einstellung der Schäfte und der Schaftsteuerung auch Namenszüge und dergl. eingewebt werden. Den Wünschen der Anwender sind hierbei keinerlei Grenzen gesetzt.

Eine vorteilhafte Weiterbildung des erfindungsgemäßen Verfahrens ist aus Anspruch 2 zu entnehmen, wobei hier insbesondere die Kettfäden im Bereich der schmalen Faltzonen eine Feinheit von etwa der Hälfte der Feinheit der Kettfäden des Mittelteils aufweisen. Haben beispielsweise die Kettfäden des Mittelteils eine Feinheit von dtex 1100, so haben die Kettfäden der schmalen Faltzonen eine Feinheit von dtex 550. Dies bringt den Vorteil. daß im gefalteten Zustand, in dem insgesamt gesehen das Material der Faltzonen vierfach gelegt vorliegt, gegenüber dem zweifachen Vorliegen des Mittelteils, daß sich über die gesamte Breite eine etwa gleichmäßige Dicke des gefalteten Gurtbandes ergibt, da die Faltzonenkettfäden etwa halb so dick sind wie die Mittelteilkettfäden.

In einer weiteren vorteilhaften Ausbildung der Erfindung werden die beiden Gewebelagen im mittleren Bereich des Mittelteils mit mindestens zwei im wesentlichen in Kettrichtung laufenden Aufreißfäden miteinander verbunden.

In einer weiteren vorteilhaften Ausbildung der Erfindung wird das Gewebe des Gurtbandes vor dem Umschlagen mit einer Beschichtung versehen. Die Beschichtung bringt eine deutliche Herabsetzung der Permeabilität des Gewebes mit sich und ermöglicht ein Aufrechterhalten des Innendrucks eines aufgeblasenen Gurtbandes über eine längere Zeit. Das ist besonders dann entscheidend, wenn ein Fahrzeug direkt nach der Kollision nicht zum Stehen kommt, sondern sich noch überschlagend oder weiterrollend bewegt, so daß der Fahrzeugpassagier über längere Zeit noch gesichert im Fahrzeugsitz gehalten werden muß.

Vorteilhafte Weiterbildungen und Merkmale der Erfindung sind den Unteransprüchen zu entnehmen.

Die Erfindung wird im folgenden unter Verweis auf die beiliegenden Zeichnungen kurz beschrieben und weiter im Detail erklärt.
- Figur 1: zeigt schematisch in perspektivischer Ansicht ein erfindungsgemäßes (Anspruch 2) Gurtband nach dem Verfahrensschritt "Weben".
- Figur 2: zeigt einen Ausschnitt X der Darstellung von Figur 1 vergrößert im Schnitt.
- Figuren 3a bis 3c: zeigen in stark schematischer Darstellung das erfindungsgemäße Gurtband gemäß Anspruch 2 vor, während und nach dem Umschlagen der Außenteile.
- Figur 4: zeigt schematisch in extremer Vergrößerung das erfindungsgemäße Gurtband gemäß den Figuren 3a bis 3c nach dem Verfahrensschritt "Umstülpen".
- Figur 5: zeigt einen Abschnitt eines erfindungsgemäßen Gurtbandes (nach Fig.1) schematisch in Draufsicht von oben.
- Figur 6: zeigt eine Weiterbildung des Gurtbandes. hergestellt nach dem Verfahren gemäß Anspruch 10.
- Figur 7: zeigt eine Weiterbildung des Gurtbandes, hergestellt nach dem Verfahren gemäß Anspruch 11.
- Figur 8: zeigt eine Weiterbildung des Gurtbandes, hergestellt nach dem Verfahren gemäß Anspruch 12.
- Figur 9: zeigt schematisch ein abgepaßt gewebtes Gurtband mit jeweils zwei Außenteilen und einem Mittelteil.
- Figur 10: zeigt schematisch die Art und Weise des aufeinanderfolgenden Umschlagens der Außenteile bis schließlich auf das Mittelteil.

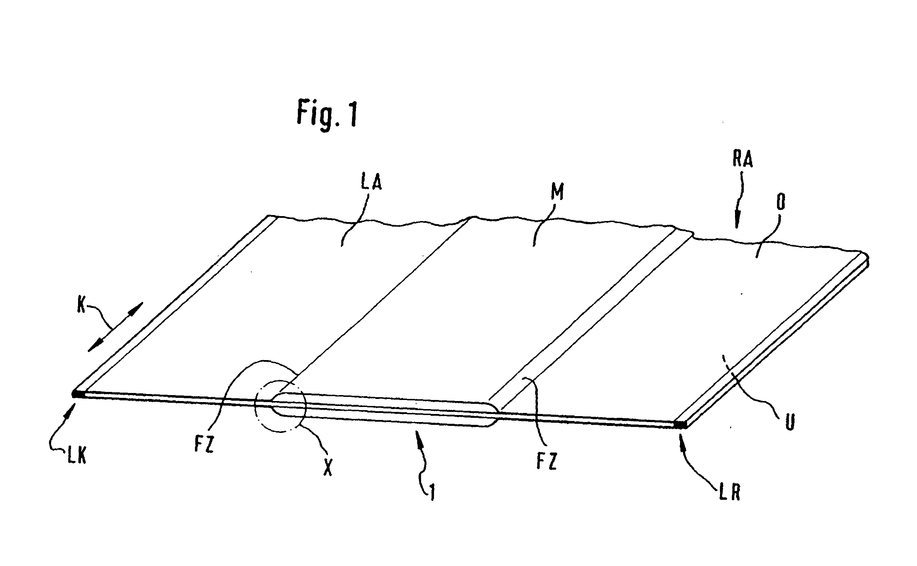

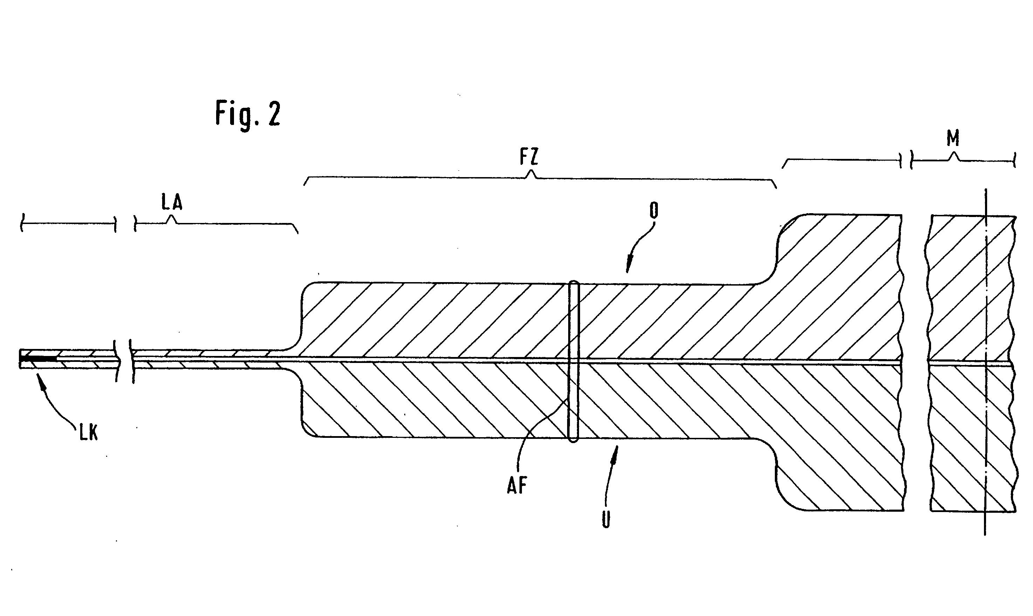

Figur 1 zeigt ein Gurtband 1 nach dem Weben mit den beiden Gewebelagen "obere Lage" O und "untere Lage" U, die wiederum in drei etwa gleich breite Teile "linkes Außenteil" LA. "Mittelteil" M und "rechtes Außenteil" RA unterteilt sind. Die Dicke der jeweiligen Kettfäden, die in Richtung des Doppelpfeils K verlaufen, und die einzelnen Kettfäden werden zur Vereinfachung der Darstellung nur schematisch angedeutet. Man erkennt im Mittelteil M, daß die Kettfäden wesentlich dicker sind als die Kettfäden in den Außenteilen LA und RA. Auf der linken Seite des linken Außenteils sind die obere Gewebelage O und die untere Gewebelage U miteinander verwebt. Dieser Bereich ist mit dem Bezugszeichen LK angedeutet. Ihr gegenüber liegt eine Kante LR, entlang derer die rechten Außenteile RA der oberen Gewebelage O und der unteren Gewebelage U miteinander verwebt sind. Im Übergangsbereich vom Mittelteil M zu den Außenteilen RA und LA sind Faltzonen FZ zu erkennen, in denen die Kettfäden feiner sind als im Mittelteil M und gröber sind als in den Außenteilen LA und RA. Die Einzelheit X wird in Figur 2 vergrößert dargestellt und weiter beschrieben. So wie das Gurtband in Figur 1 dargestellt ist, verläßt es den Webstuhl.

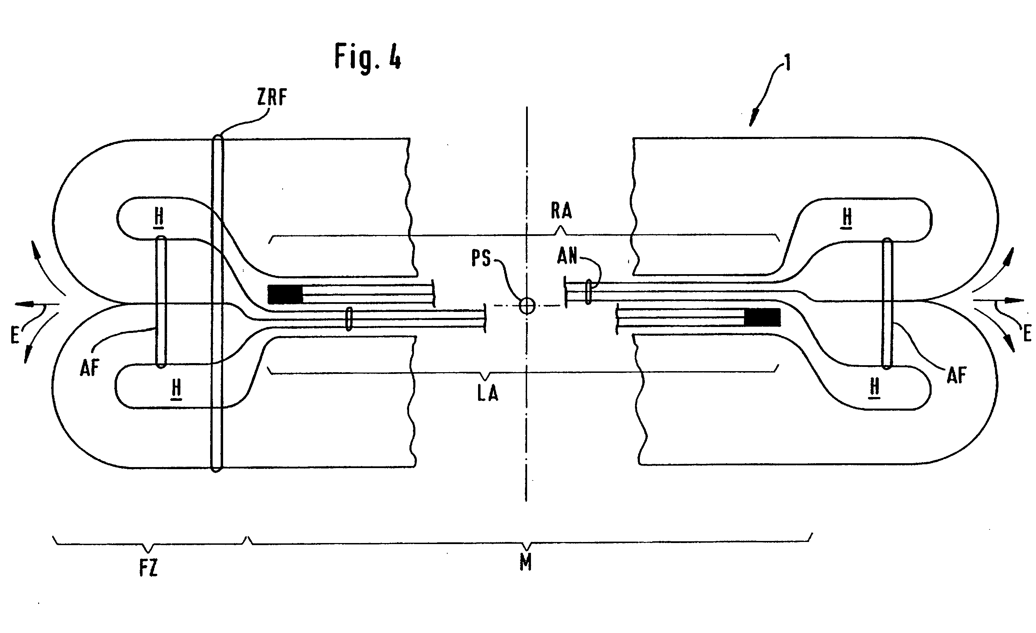

Figur 2 zeigt die Einzelheit X von Figur 1 in schematischer Darstellung extrem vergrößert, um die Kettfaden-Dickenunterschiede darzustellen. Man erkennt auf der linken Seite die linke Kante LK, entlang derer die obere Gewebelage O und die untere Gewebelage U miteinander verwebt sind. Von der linken Außenseite des gewebten Gurtbandes bis zur auf der rechten Seite von Figur 2 dargestellten Symmetrieachse sind folgende Bereiche des Gurtbandes zu erkennen: linkerhand befindet sich der linke Außenteil LA, daran schließt sich die linke Faltzone FZ an, die wiederum in den Mittelteil M übergeht. In diesem Ausführungsbeispiel sind nicht die einzelnen Ketten dargestellt, sondern ihre Dicke durch als Streifen gezeichnete Gurtbanddicke. Man erkennt im Ausführungsbeispiel von Figur 2 gut die unterschiedlichen Kettfadendurchmesser. So ist beispielsweise der Kettfadendurchmesser im linken Außenteil etwa 1/10 des Kettfadendurchmessers des Hauptteils. In der Faltzone FZ ist der Kettfadendurchmesser etwa halb so groß wie der Durchmesser der Kettläden im Bereich des Mittelteils M. Die Vorteile bzw. die unterschiedliche Funktionszuordnung der unterschiedlichen Kettfadendurchmesser ergeben sich im Detail bei der Beschreibung der Figur 4. Etwa in der Mitte der Faltzone FZ, möglicherweise jedoch auch etwas näher zum Mittelteil M gerückt, ist die Position eines schematisch dargestellten Aufreißfadens AF angegeben, der die obere Gewebelage O und die untere Gewebelage U miteinander verbindet und unter einer vorbestimmbaren Bruchlast aufreißt, so daß sich die einzelnen Gewebelagen in Richtung der Explosionspfeile E (Figur 4) bewegen und das Gurtband zu einem aufgeblasenen Gurtsack öffnen. Für den Anwendungsfall, in dem das Material der Außenteile LA und RA dicker gewählt wird. kann man die Position der Aufreißfäden AF (Fig. 4) auch etwas nach innen versetzen, um dem stärkeren Auftragen entgegezukommen. Die obere und die untere Gewebelage können sich nämlich dann etwas voneinander entfernen. da das Gewebe in den Faltzonen (in Fig. 4 nach oben und unten) etwas nachgeben kann.

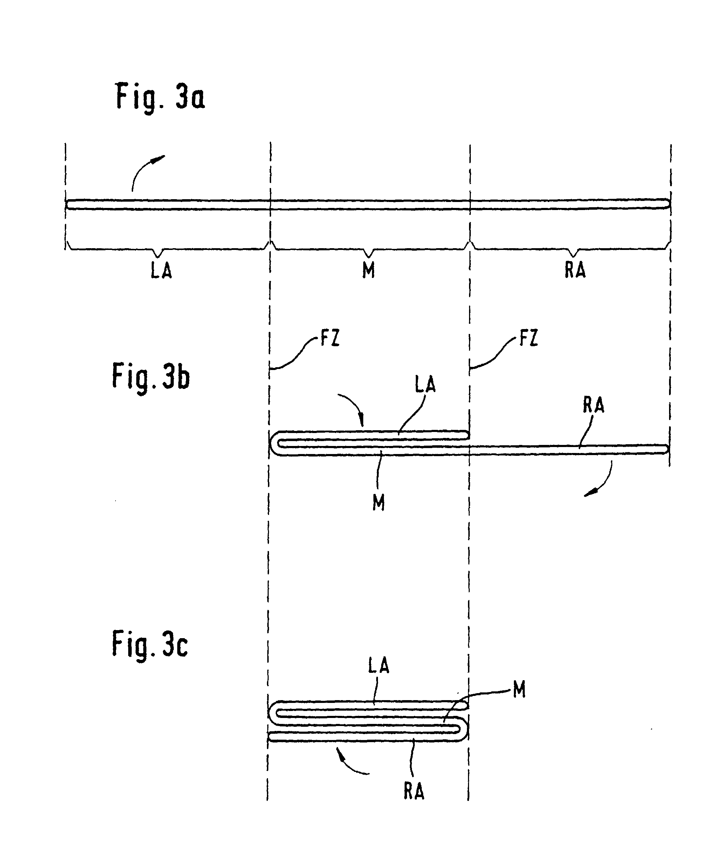

Figuren 3a bis 3c zeigen schematisch das Umschlagen der Außenteile auf den Mittelteil. Zur Vereinfachung der Darstellung wurden in dieser Darstellung Kettfäden-Durchmesserunterschiede nicht berücksichtigt. In den Figuren 3a bis 3c sind die Kettfäden durchweg mit gleichem Durchmesser schematisch dargestellt. Figur 3a zeigt die noch nicht zueinander umgeschlagenen Gewebeteile LA, M und RA. In Figur 3b ist bereits der linke Außenteil LA auf den mittleren Mittelteil M umgeschlagen. Gleichzeitig zeigt Figur 3b auf der rechten Seite den Richtungspfeil, der die Umschlagrichtung des rechten Außenteils RA andeutet. Die Bezugszeichen FZ geben hier die Lage der Faltzonen FZ an. Figur 3c zeigt das Gurtband nach dem Umschlagen der Außenteile.- Im übrigen ist es ohne Belang, ob das linke Außenteil LA oben und das rechte Außenteil RA unten auf das Mittelteil zu liegen kommt. Ebenso kann das Umschlagen in umgekehrter Richtung erfolgen. Dies ergibt technisch keinen Unterschied. Die in Figur 3c dargestellte Umschlagsfigur ergibt im Prinzip etwa die Figur eines S. Die umgekehrte Umschlagrichtung würde die Figur Z ergeben. Wie gesagt, hier besteht kein Unterschied. Die vergrößerte Darstellung von Figur 4 bezieht sich hierbei auf eine Umschlagrichtung mit dem Ergebnis der Gestalt eines Buchstabens Z.

Figur 4 zeigt in stark vergrößerter schematischer Schnittdarstellung die tatsächlichen Kettfäden-Durchmesserunterschiede. In der hier vereinfachten schematischen Darstellung erkennt man das erfindungsgemäße Gurtband nach dem Umstülpen "nach links". Es ist wieder der Mittelteil M zu erkennen, der in der Mitte abgebrochen dargestellt ist, sowie die linke Faltzone FZ. Da das erfindungsgemäße Gurtband 1 um die Mittelachse bzw. den Punkt PS punktsymmetrisch ausgebildet ist, wird die Figur 4 aus Gründen der Vereinfachung im wesentlichen nur auf einer Seite mit Bezugszeichen versehen. Natürlich erkennt man, daß in Figur 4 die tatsächliche Konfiguration des umgestülpten Gurtbandes nicht dargestellt werden kann, da die hier dargestellten Hohlräume H beispielsweise die im Bereich des Abreißfadens bzw. in den Umkehrstellen zu sehen sind, tatsächlich nicht vorliegen. Das Gurtband wird nämlich nach dem Umstülpen gebügelt oder in anderer Art und Weise geplättet und fixiert. Damit "sucht sich" jedes Material den ihm zur Verfügung stehenden Platz, so daß sich eine optimal verdichtete Packung ergibt. Diese jedoch in einer Figur darzustellen, ist einerseits äußerst schwierig. Andererseits könnte man daraus kaum noch brauchbare Informationen entnehmen.

In Fig. 4 ist auf der linken Seite ein zusätzlicher Reißfaden ZRF zu erkennen, der in der Faltzone FZ die gefalteten Gewebelagen miteinander verbindet. Diese Variation kann dann zum Einsatz kommen, wenn man ein ggfs. auftretendes "Aufbauschen" eines eingelegten voluminösen Inlets vermeiden will und ein kompakteres Gurtband anstrebt.

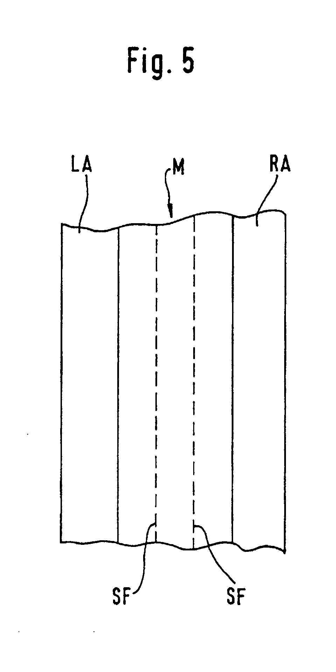

In Figur 5 ist ein Abschnitt eines erfindungsgemäßen Gurtbandes schematisch in Draufsicht von oben gezeigt. Im Mittelteil des Gurtbandes sind zwei gestrichelte Linien SF angegeben, die die Position von optionalen Abnähern für den Liefergasschlauch angeben. Diese Abnäher können entlang des Gurtbandes in das umgestülpte Gurtband mittels einer Nähmaschine eingenäht werden. Zwischen den beiden Abnähern wird der genannte Liefergasschlauch eingeschoben, der das Gurtband im Explosionsfall mit Explosionsgas versorgt.

Figur 6 zeigt ein Ausführungsbeispiel der Erfindung, hergestellt nach dem Verfahren gemäß Anspruch 9. Die Zeichnung ist aus Gründen der Vereinfachung stark schematisiert und zeigt nicht das letztendliche Produkt, sondern verschiedene Verfahrensstadien und deren besondere Merkmale. So wird hier im Prinzip ein zum Einbau in ein Sicherheitsgurtmodul vorbereiteter Sicherheitsgurt gezeigt, dessen wesentliches Merkmal darin besteht, daß er einen Bereich hat, in dem er aufblasbar ist (ABB) und einen Bereich, in dem er in einem Retraktor aufgerollt werden soll (ARB). Im Ergebnis ist der Sicherheitsgurt im Aufrollbereich ARB dünner als im Aufblasbereich ABB. Der obere Teil von Figur 6 zeigt den aus den früheren Ausführungsbeispielen dargestellten Aufblasbereich ABB des erfindungsgemäßen Gurtbandes mit dem Mittelteil M und den Außenteilen LA und RA sowie die aus dem Vorhergehenden bekannte, in den Faltzonen verlaufende Aufreißnaht AF. Ist aus einem in dieser Art gewebten Gurtband eine vorbestimmte Länge aus den Endlosmaterial abgelängt, werden die an einer Linie QL aneinanderstoßenden Aufrollbereiche ARB und Aufblasbereich ABB definiert. Sodann werden die Quernähte LSN und RSN in den Außenteilen des Gurtbandes in der Flucht der Linie QL mit einer Näheinrichtung angebracht. Diese Nähte sind Dichtnähte und schließen die Weblagen der Außenteile eng aneinander. Vor oder nach dem Anbringen der Quemähte LSN und RSN werden die Längsnähte 3 und 11 angebracht, die sich entlang des Aufrollbereiches ARB erstrecken. Die Nähte LSN, RSN, 3 und 11 umschließen im linken wie im rechten Außenteil zusammen mit den Außenrändern des Gurtbandes und den zuvor mit den Scherenlinien markierten Kanten Bereiche AS. die jeweils mit einer Doppelpunkt-Strich-Linie schematisch umfaßt sind. Sind die Bereiche AS ausgeschnitten, werden die verbleibenden Außenteile LA und RA, wie zuvor bei anderen Ausführungsbeispielen beschrieben, insbesondere bei der Erläuterung zu den Figuren 3a, 3b und 3c, Z-förmig eingeschlagen und das gesamte Gurtband gemäß dem Verfahrensschritt "Umstülpen des Mittelteils" nach links gestülpt. Dadurch ergibt sich ein Bereich, in dem das Luftsackgewebe nach innen geschlagen den Aufblasbereich ergibt, während das im Aufrollbereich ARB umgestülpte Band kein Baggewebe in sich enthält. Sodann wird der Mittelteil M des Gurtbandes entlang der Linie QL mit einer Mittennaht MN gasdicht verschlossen. Es ergibt sich ein für die Modulfertigung einbaufertiges Gurtband.

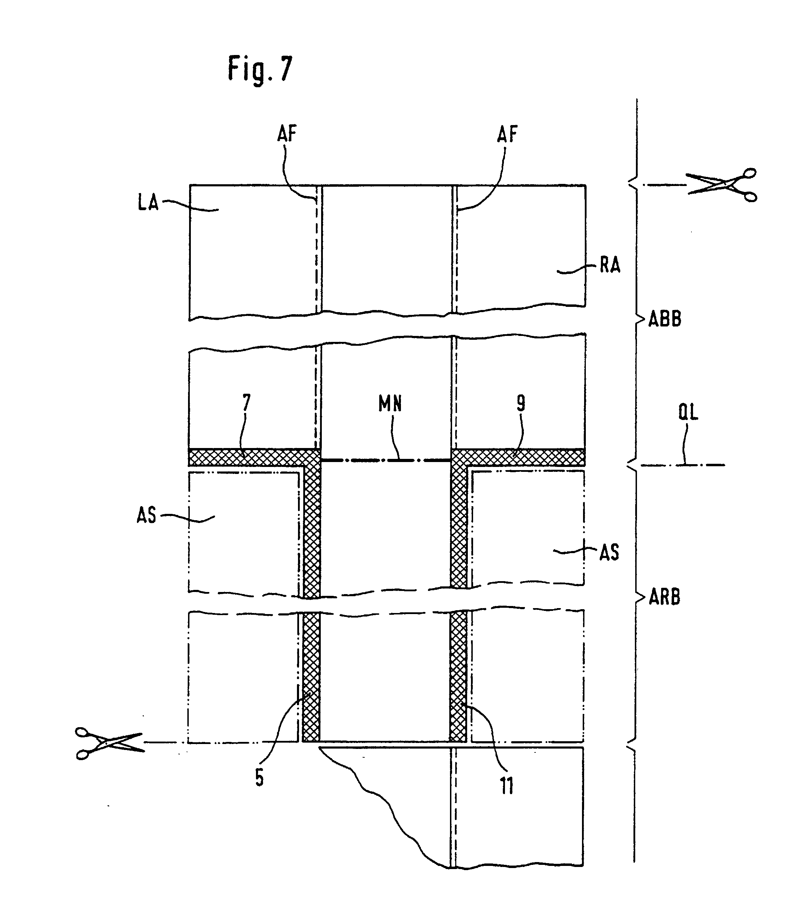

Figur 7 zeigt eine Ausbildungsform eines erfindungsgemäßen Gurtbandes, im wesentlichen gleich der Version nach Figur 6. Der Hauptunterschied besteht jedoch darin, daß dort nach dem Weben keine Nähte zur Verbindung der oberen und unteren Weblage der Außenteile gesetzt werden, sondern die Verbindung von oberer und unterer Weblage in diesem Bereich entlang einer Querlinie QL bereits während des Webens erzeugt wird, nämlich indem die obere Lage und die untere Lage der Außenteile LA und RA des Gurtbandes mittels Quernähten 7 und 9, die in Schußrichtung verlaufen, in einem Streifen miteinander verwebt werden, so daß bereits beim Weben eine formschlüssige Verbindung von oberer und unterer Weblage vorliegt. Dieselbe Verwebung soll auch entlang der Faltzonen im Aufrollbereich stattfinden, so daß in Streifen 5 und 11 entlang der Faltzonen auch eine feste Verbindung der oberen und unteren Weblage während des Webens hergestellt wird. Diese hier mit einer Kreuzschraffur symbolisch angedeuteten Verbindungsbereiche von oberer und unterer Weblage ersetzen die im Ausführungsbeispiel gemäß Figur 6 angebrachten Längs- und Quernähte. Die weitere Behandlung des Gurtbandes bis zum einbaufertigen Zustand im Modul ist aus der Beschreibung zum Ausführungsbeispiel gemäß Figur 6 gleich und deshalb dort zu entnehmen. In den Ausführungsbeispielen nach Fig. 6 und 7 ist im Bereich ARB keine Aufreißnaht AF erforderlich.

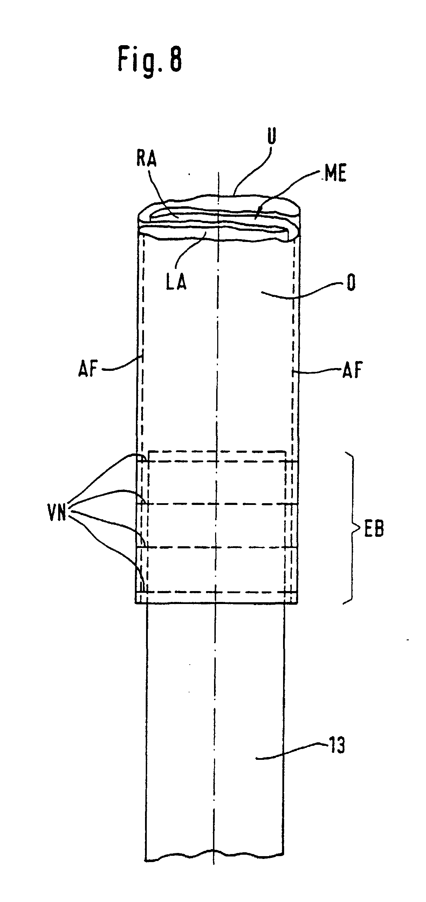

Figur 8 zeigt nun in schematischer Darstellung ein Ausführungsbeispiel eines Gurtbandes, das nach dem Verfahren gemäß Anspruch 11 hergestellt wurde. Man erkennt im oberen Teil der Figur 8 das erfindungsgemäße Gurtband, bereits umgestülpt, so daß die Außenteile LA und RA innen zu liegen kommen. Ein Gurtband 13 wird (in Fig. 8 von unten) in den Innenraum des umgestülpten Gurtbandes in die mit einem Pfeil ME angedeutete Mittelebene zwischen den eingestülpten Außenteilen LA und RA eingeschoben, und zwar in einer Länge EB, die die Länge eines Endbereiches des eingeführten Gurtbandes 13 bezeichnen soll. Der Einfachheit halber wurden die unterschiedlich dicken Gewebestärken nicht mit unterschiedlichen Strichstärken gezeichnet, sondern nur in einheitlicher Strichstärke. Aus dem Beschreibungsteil, insbesondere zu Figur 2 und 4, ist zu entnehmen. daß hier wesentliche Dickenunterschiede der Gewebe tatsächlich vorliegen. Nach dem Einbringen des einlagigen Gurtbandes 13 zwischen die beiden Lagen des zweilagigen Gewebes werden diese mittels einer oder mehrerer Nähte VN, die soweit auseinanderliegen, daß der Überlappungsbereich EB der Lagen biegeweich bleibt, vernäht. Es ist leicht einsehbar, daß die in Figur 8 gezeigten Ausführungsbeispiel vier angedeuteten Quernähte VN die Biegeweichheit des Übergangsbereichs EB des Gurtbandes nicht beeinträchtigen. Die hier gewählte Anzahl von vier Nähten VN und auch der Endbereich EB bzw. dessen Länge sind nur beispielhaft gewählt. Abhängig von besonderen Wünschen des Anwenders kann der Endbereich bzw. dessen Länge-/Breiteverhältnis anders sein als in Figur 8 dargestellt ist. Auch die Anzahl der Quernähte VN und deren Abstand zueinander kann, je nach Anforderungen des Modulherstellers. variiert werden.

Zur Montage der soeben beschriebenen Gurtbänder mit unterschiedlichen Bereichen werden diese im Aufrollbereich ARB zum Retraktor hin orientiert eingebaut, während das andere Ende mit dem Aufblasbereich ABB mit einer Gasversorgung verbunden werden. Details hierzu sind aus dem Stand der Technik bekannt und müssen deshalb an dieser Stelle nicht mehr besonders beschrieben werden.

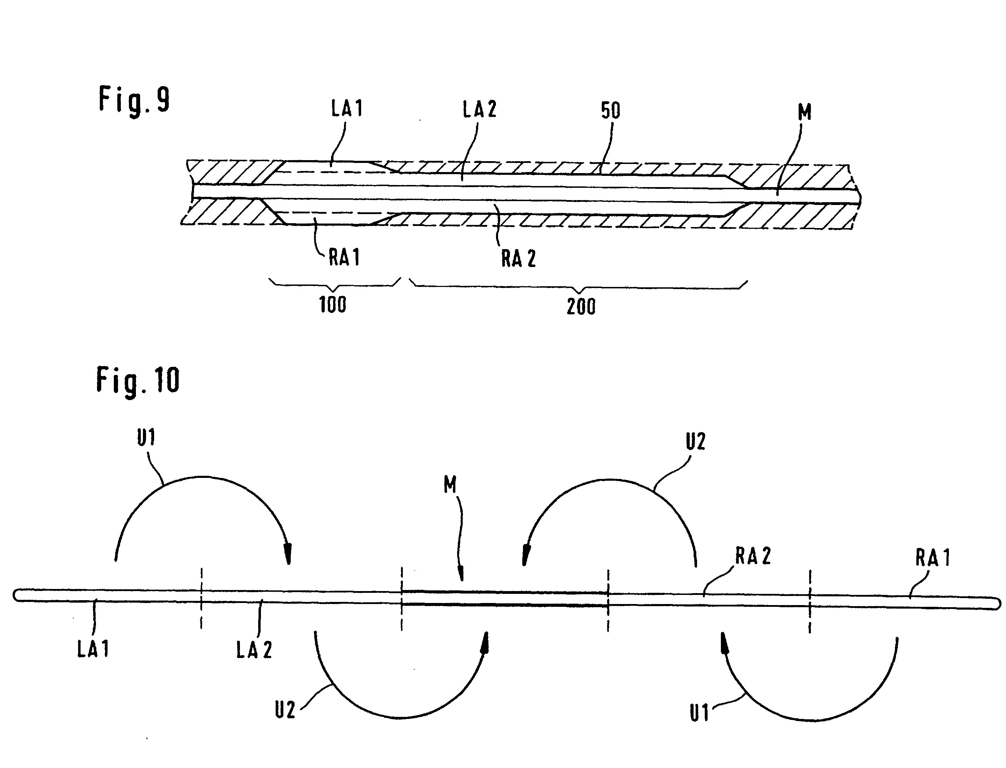

In Figur 9 ist ein abgepaßt gewebtes Gurtband dargestellt mit einem Mittelteil M, rechten Außenteilen RA1, RA2 und linken Außenteilen LA1, LA2, die nach Fig. 10, die ein gewebtes zweilagiges Gurtband (stark schematisiert) im Querschnitt zeigt, in der Reihenfolge der Pfeile U1, U2 umgeschlagen werden, so daß sie schlußendlich auf der Ober- bzw. Unterseite des Mittelteils M zu liegen kommen. Die weitere Verfahrensweise ergibt sich aus den bereits beschriebenen Ausführungsbeispielen.

Die Außenkontur des von der Webmaschine gelieferten Gurtbandes ist in Fig. 9 gestrichelt dargestellt. Die dicke, umrandende Linie 50 im Bereich der Außenteile markiert die oben beschriebenen "Abnäher". Der zwischen Außenkontur und Linie 50 liegende schraffierte Bereich wird ausgeschnitten. Details hierzu sind analog der Beschreibung zu Fig. 6 zu entnehmen. Grundsätzlich sind sämtliche Konfigurationen der "ausgeschnittenen" Gurtsack-Bandbreite möglich, z.B. für großes Volumen im Kopfbereich, "Fast-Null"-Volumen im Bereich der Schließzunge etc. Die jeweilige Ausführung wird harmonisch nach den Vorstellungen des Kunden bestimmt.

Das linke Ende des in Fig 9. gezeigten Gurtbandes weist einen Bereich 100 auf, der im Einsatzfall in der Gegend des Kopfes des Passagiers aufgeblasen wird, während das rechte Ende einen, gegenüber dem Bereich 100 querschnittsmäßig kleineren Bereich 200 enthält, der sich im Brust- und Beckenbereich des Passagiers befindet und aufgeblasen wird.

Das in Fig. 10 dargestellte Gurtband ist in folgende fünf Abschnitte unterteilt: LA1, LA2, M, RA2 und RA1. Die Abschnitte LA 1 und RA1 werden gemäß den Pfeilen U1 um etwa 180° (in Fig. 10) im Uhrzeigersinn umgeschlagen und auf die Abschnitte LA2 bzw. RA2 gelegt. Sodann werden die "Pakete" LA1/LA2 und RA1/RA2 jeweils auf das Mittelteil M umgeschlagen. Damit liegen die einzelnen Abschnitte zickzack-förmig übereinander.

Die weitere Behandlung des Gurtbandes verläuft analog zur oben beschrieben Gurtbandversion mit drei Abschnitten. Erfindungsgemäß ist es je nach Anforderung auch möglich, weitere Außenteile LA3, LA4, ..., RA3, RA4, ... vorzusehen (sieben Abschnitte, neun Abschnitte...), um den Umfang des aufgeblasenen Gurtluftsacks den jeweiligen Anforderungen folgend individuell zu gestalten.

## Patentansprüche

1. Verfahren zum Herstellen eines aufblasbaren Gurtbandes (1), insbesondere für einen Sicherheitsgurt, **gekennzeichnet durch** folgende Schritte:
1.1) Weben eines zweilagigen Gewebes mit einer oberen Lage (O) und einer unteren Lage (U), das wie folgt aufgebaut ist:
a) das Gewebe besteht aus wenigstens einem linken Außenteil (LA), einem Mittelteil (M) und wenigstens einem rechten Außenteil (RA), wobei das wenigstens eine linke Außenteil (LA), das Mittelteil (M) und das wenigstens eine rechte Außenteil (RA) etwa gleich breit sind,
b) die Kettfäden der Außenteile sind feiner als die Kettfäden des Mittelteils,
c) in jeweils zwischen dem Mittelteil (M) und den daran angrenzenden Außenteilen (LA, RA) liegenden, gegenüber dem breiten Mittelteil (M) schmalen Faltzonen (FZ) sind die Kettfäden feiner als die Kettfäden im Mittelteil (M), aber gröber als in den Außenteilen (LA, RA),
d) die obere Lage (O) und die untere Lage (U) sind im Bereich der äußersten Ränder der Außenteile miteinander verwebt,
e) die obere Lage (O) und die untere Lage (U) sind wenigstens im Bereich der beiden schmalen Faltzonen (FZ) mit mindestens einem in Kettrichtung laufenden Aufreißfaden (AF) miteinander verbunden,
1.2) Umschlagen und Aufeinanderlegen der äußersten Außenteile (RA1, LA1) auf die benachbarten Teile (RA2, M, LA2), so daß alle Teile (RA1, RA2, M, LA2, LA1) hintereinander über bzw. unter dem Mittelteil (M) liegen, so daß sich - in Kettrichtung gesehen - die Gestalt eines flachgedrückten Zick-Zack ergibt,
1.3) Umstülpen des Mittelteils "nach links", derart daß die ehemals zueinander zeigende obere Lage (O) und untere Lage (U) des Mittelteils (M) nach außen zu liegen kommen und die umgeschlagenen Außenteile (RA1, RA2, LA2, LA1) und das Mittelteil (M) zwischen sich einschließen.

2. Verfahren nach Anspruch 1, **dadurch gekennzeichnet, daß** das zweilagige Gewebe folgende Konstruktion hat:
a) die Bandbreite des Gewebes ist in einen linken Außenteil (LA), einen Mittelteil (M) und einen rechten Außenteil (RA) unterteilt, drei etwa gleich breit sind,
b) die Kettfäden der Außenteile (RA, LA) haben die Feinheit (dtex) für Airbags üblicher Kettfäden, insbesondere eine Feinheit (dtex) von etwa 1/10 der Feinheit (dtex) der Kettfäden des Mittelteils (M),
c) in zwei jeweils zwischen dem Mittelteil (M) und den Außenteilen (RA, LA) liegenden schmalen Faltzonen (FZ) sind die Kettfäden feiner als die Kettfäden im Mittelteil (M), haben insbesondere eine Feinheit (dtex) von etwa 1/2 der Feinheit (dtex) der Kettfäden des Mittelteils (M),
d) die beiden Gewebelagen sind im Bereich der äußeren Ränder der Außenteile (RA, LA) miteinander verwebt,
e) die beiden Gewebelagen (O, U) sind wenigstens im Bereich der beiden schmalen Faltzonen (FZ) mit mindestens einem im wesentlichen in Kettrichtung laufenden Aufreißfaden (AF) miteinander verbunden.

3. Verfahren nach Anspruch 1 oder 2, **dadurch gekennzeichnet, daß** die beiden Gewebelagen im mittleren Bereich des Mittelteils (M) mit mindestens zwei in Kettrichtung laufenden Aufreißfäden miteinander verwebt werden.

4. Verfahren nach einem der Ansprüche 1 bis 3, **dadurch gekennzeichnet, daß** das Gewebe vor dem Umschlagen außen beschichtet wird.

5. Gurtband, für einen Sicherheitsgurt, mit gewebtem zweilagigen Gewebe, mit einer oberen Lage und einer unteren Lage, gewebt nach dem Verfahren eines der vorhergehenden Ansprüche, **gekennzeichnet durch** folgende Merkmale:
a) die Bandbreite des Gewebes ist in einen linken Außenteil (LA), einen Mittelteil (M) und einen rechten Außenteil (RA) unterteilt, drei etwa gleich breit sind,
b) die Kettfäden der Außenteile sind feiner als die Kettfäden des Mittelteils,
c) in jeweils zwischen dem Mittelteil (M) und den daran angrenzenden Außenteilen (LA, RA) liegenden, gegenüber dem breiten Mittelteil (M) schmalen Faltzonen (FZ) sind die Kettfäden feiner als die Kettfäden im Mittelteil (M), aber gröber als in den Außenteilen (LA, RA),
d) die obere Lage (O) und die untere Lage (U) sind im Bereich der äußersten Ränder der Außenteile miteinander verwebt,
e) die obere Lage (O) und die untere Lage (U) sind wenigstens im Bereich der beiden schmalen Faltzonen (FZ) mit mindestens einem in Kettrichtung laufenden Aufreißfaden (AF) miteinander verbunden,
f) der linke Außenteil (LA) ist entlang der linken Faltzone (FZ) auf die obere Lage (O) des Mittelteils (M) umgeschlagen,
g) der rechte Außenteil (RA) ist entlang der rechten Faltzone auf die untere Lage (U) des Mittelteils (M) umgeschlagen, so daß sich - in Kettrichtung gesehen - die Gestalt eines flachgedrückten Z ergibt,
h) das Mittelteil (M) ist "nach links" umgestülpt, derart daß die ehemals zueinander zeigende obere Lage (O) und untere Lage (U) des Mittelteils (M) nach außen zu liegen kommen und die umgeschlagenen Außenteile (RA, LA) und das Mittelteil (M) zwischen sich einschließen.

6. Gurtband nach Anspruch 5, **dadurch gekennzeichnet, daß** der oder die in den beiden schmalen Faltzonen (FZ) laufenden Aufreißfäden (AF) gewebt oder genäht sind.

7. Gurtband nach Anspruch 5 oder 6, **dadurch gekennzeichnet, daß** das Gewebe außen beschichtet ist.

8. Gurtband nach Anspruch 5, 6 oder 7, **dadurch gekennzeichnet, daß** der Schußfaden aus einem Monofil und/oder einem Multifil besteht.

9. Verfahren nach einem der Ansprüche 1 bis 4, zur Herstellung eines im Rapport gewebten Gurtbandes, **dadurch gekennzeichnet,**
- **daß** der Schritt "1.1)Weben eines zweilagigen Gewebes" derart durchgeführt wird, daß das zweilagige Gewebe folgende weiteren Merkmale aufweist:
f) das Gewebe ist in zwei zum Teil unterschiedlich gewebte Bereiche unterteilt, nämlich einen Aufrollbereich (ARB) des Gurtbandes und einen Aufblasbereich (ABB) des Gurtbandes,
g) die obere Lage (O) und die untere Lage (U) der Außenteile (LA, RA) des Gurtbandes sind mit gewebten Quernähten (7, 9) in Schußrichtung entlang eines vorbestimmten Streifens zwischen Aufrollbereich (ARB) und Aufblasbereich (ABB) miteinander verwebt,
h) die obere Lage (O) und die untere Lage (U) der Außenteile (LA, RA) des Gurtbandes sind mittels Längsnähten (5, 11) in Kettrichtung entlang direkt neben den Faltzonen (FZ) im Aufrollbereich (ARB) verlaufender Streifen miteinander verwebt,
- **daß** vor dem Schritt "1.3) Umstülpen des Mittelteils (M)" folgender Schritt durchgeführt wird:
Ausschneiden der jeweils durch die gewebte Längs- (5, 11) und Quernaht (7,9) vom restlichen Gurtband abgeteilten Außenteile (AS).

10. Verfahren nach einem der Ansprüche 1 bis 4, **dadurch gekennzeichnet, daß** nach dem Schritt "1.3) Umstülpen des Mittelteils (M)" eines abgelängten Stückes Gurtband folgende Schritte durchgeführt werden:
1.4) Einführen eines Endbereichs (EB) einer bestimmten Länge eines einlagigen Gurtbandes (13) zwischen die obere Lage (O) mit Außenteil (LA/RA) und die untere Lage (U) mit Außenteil RA/LA) des zweilagigen Gewebes,
1.5) Vernähen der nun übereinanderliegenden oberen Lage des Mittelteils (M) mit dem Außenteil (RA/LA), dem Endbereich (EB) der bestimmten Länge des einlagigen Gurtbandes, der unteren Lage Mittelteil (M) mit Außenteil (LA/RA)) mittels einer oder mehrerer Nähte (VN), die so weit auseinanderliegen, daß der überlappende Endbereich (EB) der Lagen biegeweich bleibt.

## Claims

1. A method of fabricating an inflatable webbing (1), more particularly for a seat belt, **characterized by** the following steps:
1.1 weaving a two-ply fabric having an upper ply (O) and a lower ply (U), configured as follows:
a) the fabric consists of at least one left outer part (LA),
a middle part (M) and at least one right outer part (RA) roughly equal in width,
b) the warp threads of the outer parts are finer than the warp threads of the middle part,
c) in the narrow creases (FZ) each located between the middle part (M) and the adjoining outer parts (LA, RA), opposite the broad middle part (M) the warp threads are finer than the warp threads in the middle part (M), but coarser than in the outer parts (LA, RA),
d) the upper ply (O) and the lower ply (U) are interwoven in the region of the outermost edges of the outer parts,
e) the upper ply (O) and the lower ply (U) are interwoven at least in the region of the two narrow creases (FZ) with at least one burst thread (AF) running substantially in the warp direction,
1.2 folding and placing the outermost outer parts (RA1, LA1)
on adjoining parts (RA2, M, LA2) so that all parts (RA1, RA2, M, LA2, LA1) are located in sequence above or below the middle part (M) to result in - as viewed in the warp direction - the configuration of a collapsed concertina,
1.3 tucking the middle part "to the left" so that the upper ply (O) and the lower ply (U) of the middle part (M) formerly facing each other now face outwards and sandwiching the folded outer parts (RA1, RA2, LA2, LA1) and the middle part (M) inbetween.

2. The method as set forth in claim 1, **characterized in that** the two-ply fabric has the following design features:
a) the fabric webbing width is divided into three parts roughly equal in width, namely a left outer part (LA), a middle part (M) and a right outer part (RA),
b) the dtex of the warp threads of the outer parts (RA, LA) is that of warp threads as usual for air bags, more particularly a dtex of approximately a tenth of the dtex of the warp threads of the middle part (M),
c) in two narrow creases (FZ) each located between the middle part (M) and the adjoining outer parts (RA, LA) the warp threads are finer than the warp threads in the middle part (M), more particularly having a dtex roughly half that of the warp threads of the middle part (M),
d) the two fabric plies are interwoven in the region of the outermost edges of the outer parts (RA, LA),
e) the two fabric plies (O, U) are interwoven at least in the region of the two narrow creases (FZ) with at least one burst thread (AF) running substantially in the warp direction.

3. The method as set forth in claim 1 or 2, **characterized in that** the two fabric plies in the middle portion of the middle part (M) are interwoven with at least two burst threads running in the warp direction.

4. The method as set forth in any of the claims 1 to 3, **characterized in that** the fabric is coated on the outside prior to being folded.

5. A webbing, more particularly for a seat belt, comprising a woven two-ply (upper ply, lower ply) fabric woven by the method of any of the preceding claims, more particularly **characterized by** the following features:
a) the fabric webbing width is divided into three parts roughly equal in width, namely a left outer part (LA), a middle part (M) and a right outer part (RA),
b) the warp threads of the outer parts are substantially finer than the warp threads of the middle part,
c) in in relation to the middle apart (M) narrow creases (FZ) each located between the middle part (M) and the adjoining outer parts (RA, LA) the warp threads are finer than the warp threads in the middle part (M), but coarser than in the outer parts (RA, LA),
d) the upper ply (O) and the lower ply (U) are interwoven in the region of the outermost edges of the outer parts,
e) the upper ply (O) and lower ply (U) are interwoven at least in the region of the two narrow creases (FZ) with at least one burst thread (AF) running in the warp direction,
f) the left outer part (LA) is folded along the left crease (FZ) onto the upper ply (O) of the middle part (M),
g) the right outer part (RA) is folded along the right crease (FZ) onto the lower ply (U) of the middle part (M), so that - as viewed in the warp direction - the configuration of a collapsed concertina materializes
h) the middle part is tucked "to the left" so that the upper ply (O) and the lower ply (U) of the middle part (M) formerly facing each other now face outwards and sandwich the folded outer parts (RA, LA) and the middle part (M) inbetween.

6. The webbing as set forth in claim 5, **characterized in that** the one or both burst threads (AF) running in the two narrow creases (FZ) are woven or stitched.

7. The webbing as set forth in claim 5 or 6, **characterized in that** the fabric is coated on the outside.

8. The webbing as set forth in claim 5, 6 or 7, **characterized in that** the weft thread is made of a monofil and/or multifil.

9. The method as set forth in any of the claims 1 to 4 for fabricating a webbing woven to specification, **characterized in that**
- the step "1.1 Weaving a two-ply fabric" is implemented such that the two-ply fabric comprises the following further features:
1.1 f) the fabric is divided into two portions differingly woven in part, namely a retraction portion (ARB) of the webbing and an inflation portion (ABB) of the webbing,
g) the upper ply (O) and the lower ply (O) of the outer parts (LA,RA) of the webbing are interwoven by means of transverse seams (7, 9) in the weft direction along a predetermined strip between the retraction portion (ARB) and inflation portion (ABB),
h) the upper ply (O) and the lower ply (O) of the outer parts (LA,RA) of the webbing are interwoven by means of longitudinal seams (5, 11) in the warp direction along strips running directly alongside the creases (FZ) in the retraction portion (ARB),
- prior to the step "1.3 Tucking the middle part (M)" the following step is implemented:
1.31 cutting out the outer parts (AS) each divided from the remaining webbing by the woven longitudinal (5,11) and transverse seam (7, 9). (Fig. 7)

10. The method as set forth in any of the claims 1 to 4, **characterized in that** after the step "1.3 Tucking the middle part (M)" of a cut-to-length piece of the webbing the following steps are implemented:
1.5 inserting an end portion (EB) of a certain length of a single-ply webbing (13) between the upper ply (O) with outer part (LA/RA) and lower ply (U) with outer part (RA/LA) of the two-ply fabric,
1.6 stitching the sandwiched upper ply of the middle part (M) with outer part (RA/LA), end portion (EB) of specific length of single-ply webbing, lower ply of the middle part (M) with outer part(LA/RA) by means of one or more seams (VN) spaced away from each other sufficiently so that the overlapping portion (EB) of the plies remains floppy.

## Revendications

1. Procédé pour la fabrication d'une sangle (1) gonflable, notamment destinée à une ceinture de sécurité, **caractérisé par** les étapes suivantes:
1.1) tisser un tissu à deux couches comportant une couche supérieure (O) et une couche inférieure (U), qui est constitué comme suit:
a) le tissu consiste en au moins une partie extérieure gauche (LA), une partie médiane (M) et au moins une partie extérieure droite (RA), la partie extérieure gauche (LA) qui est au moins au nombre de une, la partie médiane (M) et la partie extérieure droite (RA) qui est au moins au nombre de une étant environ de la même largeur,
b) les fils de chaîne des parties extérieures sont plus fins que les fils de chaîne de la partie médiane,
c) dans les zones de pliage (FZ), étroites par rapport à la partie médiane (M) large, se trouvant entre la partie médiane (M) et les parties extérieures (LA, RA) contiguës, les fils de chaîne sont plus fins que les fils de chaîne dans la partie médiane (M), mais plus grossiers que dans les parties extérieures (LA, RA),
d) la couche supérieure (O) et la couche inférieure (U) étant tissées ensemble dans la zone des bords les plus à l'extérieur des parties extérieures,
e) la couche supérieure (O) et la couche inférieure (U) sont reliées entre elles au moins dans la zone des deux zones de pliage (FZ) étroites moyennant au moins un fil de déchirure (AF) s'étendant en direction de la chaîne,
1.2) replier et superposer les parties extérieures (RA1, LA1) les plus à l'extérieur sur les parties voisines (RA2, M, LA2) de sorte que toutes les parties (RA1, RA2, M, LA2, LA1) sont couchées l'une derrière l'autre au-dessus ou au-dessous de la partie médiane (M), de manière à ce que - vu en direction de la chaîne - il résulte la forme d'un zigzag aplati,
1.3) retourner la partie médiane "à l'envers" de sorte que la couche supérieure (O) et la couche inférieure (U) de la partie médiane (M) précédemment dirigées l'une vers l'autre se retrouvent à l'extérieur et renferment entre elles les parties extérieures (RA1, RA2, LA2, LA1) et la partie médiane (M).

2. Procédé selon la revendication 1, **caractérisé en ce que** le tissu à deux couches présente la construction suivante:
a) la largeur de bande du tissu est subdivisée en une partie extérieure gauche (LA), une partie médiane (M) et une partie extérieure droite (RA), les trois étant environ de la même largeur,
b) les fils de chaîne des parties extérieures (RA, LA) ont la finesse (dtex) des fils de chaîne habituels pour airbags, notamment une finesse (dtex) d'environ un dixième de la finesse (dtex) des fils de chaîne de la partie médiane (M),
c) dans deux zones de pliage (FZ) étroites se trouvant entre la partie médiane (M) et les parties extérieures (RA, LA), les fils de chaîne sont plus fins que les fils de chaîne dans la partie médiane (M), présentant notamment une finesse (dtex) d'environ la moitié de la finesse (dtex) des fils de chaîne de la partie médiane (M),
d) les deux couches de tissu sont tissées ensemble dans la zone des bords extérieurs des parties extérieures (RA, LA),
e) les deux couches de tissu (O, U) sont reliées entre elles au moins dans la zone des deux zones de pliage (FZ) étroites moyennant au moins un fil de déchirure s'étendant substantiellement en direction de la chaîne.

3. Procédé selon les revendications 1 ou 2, **caractérisé en ce que** les deux couches de tissu sont tissées ensemble dans la zone médiane de la partie médiane (M) moyennant au moins deux fils de déchirure s'étendant en direction de la chaîne.

4. Procédé selon l'une quelconque des revendications 1 à 3, **caractérisé en ce que** le tissu est enduit à l'extérieur avant d'être replié.

5. Sangle destinée à une ceinture de sécurité, comportant un tissu à deux couches constitué d'une couche supérieure et d'une couche inférieure, tissée selon le procédé d'une des revendications précédentes, **caractérisée par** les caractéristiques suivantes:
a) la largeur de la bande est subdivisée en une partie extérieure gauche (LA), une partie médiane (M) et une partie extérieure droite (RA), les trois étant environ de la même largeur,
b) les fils de chaîne des parties extérieures sont plus fins que les fils de chaîne de la partie médiane,
c) dans les zones de pliage (FZ), étroites par rapport à la partie médiane (M), se trouvant entre la partie médiane (M) et les parties extérieures (LA, RA) contiguës, les fils de chaîne sont plus fins que dans la partie médiane (M), mais plus grossiers que dans les parties extérieures (LA, RA),
d) la couche supérieure (O) et la couche inférieure (U) sont tissées ensemble dans la zone des bords les plus à l'extérieur des parties extérieures,
e) la couche supérieure (O) et la couche inférieure (U) sont reliées entre elles au moins dans la zone des deux zones de pliage (FZ) étroites moyennant au moins un fil de déchirure (AF) s'étendant en direction de la chaîne,
f) la partie extérieure gauche (LA) est repliée le long de la zone de pliage (FZ) gauche sur la couche supérieure (O) de la partie médiane (M),
g) la partie extérieure droite (RA) est repliée le long de la zone de pliage droite sur la couche inférieure (U) de la partie médiane (M), de manière à ce que - vu en direction de la chaîne - il résulte la forme d'un Z aplati,
h) la partie médiane est retournée "à l'envers" de sorte que la couche supérieure (O) et la couche inférieure (U) de la partie médiane (M) précédemment dirigées l'une vers l'autre se retrouvent à l'extérieur et renferment entre elles les parties extérieures (RA, LA) et la partie médiane (M).

6. Sangle selon la revendication 5, **caractérisée en ce que** le ou les fils de déchirure (AF) s'étendant dans les deux zones de pliage (FZ) étroites sont tissés ou cousus.

7. Sangle selon les revendications 5 ou 6, **caractérisée en ce que** le tissu est enduit à l'extérieur.

8. Sangle selon les revendications 5, 6 ou 7, **caractérisée en ce que** le fil de trame consiste en un monofil et/ou un multifil.

9. Procédé selon l'une quelconque des revendications 1 à 4 pour la fabrication d'une sangle tissée avec un rapport, **caractérisé**
- **en ce que** l'étape "tisser un tissu à deux couches" est exécutée de manière à ce que le tissu à deux couches présente les caractéristiques supplémentaires suivantes:
f) le tissu est subdivisé en deux zones à tissage partiellement différent, à savoir une zone d'enroulement (ARB) de la sangle et une zone de gonflage (ABB) de la sangle,
g) la couche supérieure (O) et la couche inférieure (U) des parties extérieures (LA, RA) de la sangle sont tissées ensemble le long d'une bande prédéterminée entre la zone d'enroulement (ARB) et la zone de gonflage (ABB) moyennant des coutures transversales tissées (7, 9) en direction de la trame,
h) la couche supérieure (O) et la couche inférieure (U) des parties extérieures (LA, RA) de la sangle sont tissées ensemble le long de bandes s'étendant directement à côté des zones de pliage (FZ) dans la zone d'enroulement (ARB) moyennant des coutures longitudinales (5, 11) en direction de la chaîne,
- **en ce qu'**avant l'étape "1.3) retourner la partie médiane (M)" l'étape suivante est exécutée:
découper les parties extérieures (AS) séparées par la couture longitudinale (5, 11) et la couture transversale (7,9) de la sangle restante.

10. Procédé selon l'une quelconque des revendications 1 à 4, **caractérisé en ce qu'**après l'étape "1.3 retourner la partie médiane (M)" d'un bout de sangle d'une longueur déterminée, les étapes suivantes sont exécutées:
1.4) introduire une zone d'extrémité (EB) d'une longueur déterminée d'une sangle à une couche (13) entre la couche supérieure (O) avec la partie extérieure (LA, RA) et la couche inférieure (U) avec la partie extérieure (RA, LA) du tissu à deux couches,
1.5) coudre ensemble la couche supérieure de la partie médiane (M) avec la partie extérieure (RA, LA), la partie d'extrémité (EB) de la longueur déterminée de la sangle à une couche, la couche inférieure de la partie médiane (M) avec la partie extérieure (LA, RA) désormais superposées au moyen d'une ou de plusieurs coutures (VN) qui son espacées au point que la zone d'extrémité chevauchante des couches reste flexible.
